# EUROPEAN PATENT APPLICATION

(11) **EP 3 170 847 A1**
(43) Date of publication of application: **24.05.2017**
(21) Application number: 15195516.8
(22) Date of filing: 20.11.2015
(51) Int. Cl.: C08G 18/22, C08G 18/62, C08G 18/73, C08G 18/08, C09D 175/04, C08J 5/18

(54) **ENCAPSULATED ACCELERATORS FOR COATINGS**

(71) Applicant: OMG Borchers GmbH, 40764 Langenfeld (DE)
(72) Inventor: Simpson, Neil John, 41352 Korschenbroich (DE); Dechamps, Carina, 42719 Solingen (DE); Oberste, Dietmar, 48599 Gronau (DE)
(74) Representative: Eisenführ Speiser

(57) **Abstract**

The invention relates to an organometallic catalyst that has been encapsulated to create a curing system for water-borne 2K polyurethane coatings. The catalyst is released from the capsules upon film-formation, and without further stimuli, to enable a wide range of application methods. Separation of the catalyst from the coating formulation enables beneficial properties prior to release and activation, such as longer pot-life upon mixing of reactive components, prevention of substantial hydrolysis during storage and use leading to longer shelf life, and the minimization of foam creation.

## Description

### Field of the Invention

A non-tin organometallic catalyst has been encapsulated in order to create a curing system for water-borne 2K polyurethane systems. The capsules release the catalyst upon film-formation, and without further stimuli, to enable a wide range of application methods. By separating the catalyst from the paint formulation we can enable beneficial properties prior to release and activation, such as longer pot-life upon mixing of reactive components, prevent hydrolysis during storage and use and to minimise the creation of foam. This invention enables non-toxic, tin-free 2k PU formulations with a wide range of application methods and longer pot-life and shelf-life for paint manufacturers.

### Background Information

Many coating systems require cross-linking to provide chemical resistance, exterior durability, and speed of cure. Two components are crosslinked in a so called 2K reaction with the aid of a catalyst. The rate of the crosslinking reaction has to be adjusted to the application, application method and to customer's requirements. Most of the catalysed coatings follow an Arrhenius rate.

Choosing between longer pot life and faster cure time is an ongoing challenge of 2K polyurethane coating formulations that results in a trade-off on one or both of these key properties. This becomes further complicated by trying to extend the shelf-life of a material that may ordinarily become unstable upon storage. Many 2K polyurethane paints rely on organometallic complexes to achieve the required cure time and temperature for the chosen application. Metallic compounds based on mercury, lead, tin, bismuth, and zinc are used as polyurethane catalysts. Mercury catalysts and organostannic compounds are no longer a suitable option as paint formulations increasingly have to adhere to restrictions and regulations as set forth by REACH and the EPA.

Bismuth, tin, zinc and zirconium catalysts can be used in place of these toxic compounds but they still suffer from issues in final formulations and cannot meet the demands of WB paints. Bismuth-based catalysts, such as bismuth 2-ethylhexanoate or bismuth neodecanoate, do not have the environmental draw-backs of organnostannic compounds, but they create issues when used in water-based formulations that are not satisfied by current strategies. For example, bismuth catalysts show a strong reaction to the presence of moisture due to the hydrolysis of the bismuth salt in water. They also create issues of foam development when formulated.

U.S. Pat. No. 4,584,362 describes the use of bismuth(III) tricarboxylates, such as bismuth-2-ethylhexanoate or bismuth neodecanoate. They are characterized by very high catalytic activity with good selectivity with respect to the urethanization reaction, and additionally do not raise high toxicological concern; however they are extremely sensitive to moisture.

In WO 2004/033519 and U.S. Pat. No. 5,719,229 it was attempted to stabilize bismuth(III) tricarboxylates by way of ligands, such as quinolines, carboxylic acids or diketones, and/or to increase the pot life of the polyurethane composition, the ligands used in the process did not result in sufficient stabilization of the bismuth(III) tricarboxylate or drastically reduce the catalytic activity thereof, in some cases precipitants were formed. In addition, significant discoloration of the catalyst and of the cured polyurethane compositions occurred, which was particularly pronounced under the effect of light.

Strategies to prevent performance issues in water-based systems exist that involve delaying catalysis, using non-isocyanates to give polyurethane bonds, using higher quantities of catalyst, synthesis of the catalyst in situ or blocking/de-blocking of isocyanates. However, all of these routes require additional steps, or higher temperatures, to enable the catalysis which limits the application possibilities by restricting the conditions of release or by hindering the pot-life and shelf-life.

In this invention we have protected the catalyst from its environment using encapsulation. The use of microencapsulated ingredients in the manufacture of pharmaceuticals, pesticides, paints (particularly corrosion resistance), adhesives, sealants and printing inks is well known. Conventional encapsulation methods available up to the present time can generally be classified as either physical-mechanical encapsulation methods or chemical encapsulation methods. Included among conventional chemical encapsulation methods are physicochemical methods such as coacervation, interfacial polymerization methods, in situ methods and the like. There are examples for CASE applications where materials are coated in a resin that can later be dissolved [US3391095 A], or coated onto a capsule which is further protected by a solvable resin [EP1852452], or have a high melting point or glass transition state that can be heated to release contents [US4663415 A]. Indeed, encapsulation techniques are well-known and have evolved for over 50 years. Recent advancements in the coatings area have been seen in the controlled release of reactive agents for self-healing coatings [WO2015074039, US20130196071].

We have found no relevant literature for the encapsulation of bismuth catalysts for Polyurethane CASE applications that can be released upon film-formation without additional stimuli. Pot life for adhesives for carpets have been lengthened by using a semi-crystalline to encapsulate tin [EP1072622]. One component systems are very common in adhesives [EP0873369] discloses a method for encapsulating metals such as bismuth in wax, but this requires thermal activation. Bismuth has also been encapsulated using a hydrophilic polymer for microbial action [WO2003055941].

In this work we have identified a capsule technology provided by Mikrocaps d.o.o (Slovenia) that can allow release only on film-formation, and that has stability to high shear forces. The encapsulation protects the catalyst from hydrolysis, adsorption onto pigment impurities in the system or the acid functionality of the resin that could deactivate it. Prior issues of foaming and breakdown materials have also been improved.

Recently PPG have filed a patent application on a method to encapsulate DBDTL to improve the stability and pot-life of this catalyst [US 2015/01352592 A1], however this work does not address the environmental issues caused by using tin and it is limited to spray application due to the pressure required for the release mechanism. In this invention we have been able to encapsulate a bismuth catalyst to solve issues related to water-borne systems and in a way that allows shear-stress stability and release upon film-formation.

### Summary of the Invention

In this invention we disclose the use of an encapsulated catalyst or catalysts, to be used in coating compositions that comprise of a 2K or two component resin system that cures to form a polyurethane coating. Furthermore the invention comprises a release of catalyst from the capsules upon the film-forming process to facilitate curing after application.

Furthermore, the catalysts are stable to typical shear forces which enables ease of incorporation of a coating as defined herein without loss of performance. Furthermore, the separation of the catalyst from the 2K coating via the capsule protection can reduce the typical curing rate prior to application, thereby increasing pot-life. Furthermore storage stability of the catalyst in a water-based component, such as the polyol component, is improved due to the protection of the capsule against water and other potential reactions. In selected systems the encapsulated bismuth neodecanoate gave reduced haze to coatings when compared with the selected emulsified DBDTL. Aspects of the coatings properties before storage were similar between encapsulated and non-encapsulated bismuth such as gloss, haze and drying time. We observed that the free bismuth catalyst was not soluble nor easily dispersible in water, whereas the capsules were easier to disperse and to handle in these formulations.

The invention provides water-based coating compositions, which comprises an organometallic complex encapsulated in a polymer and a chemically curing coating resin such as a polyurethane system.

The invention provides a method comprising contacting a 2K curable water-based coating composition with a polymer encapsulated solution comprising of an organometallic catalyst or combination of catalysts that is based on, but not limited to, metals such as bismuth, mercury, tin and zinc, but more preferably bismuth or combinations of bismuth with other metals.

Other aspects and embodiments of the present invention will be evident from the discussion that follows below. These and other objects of this invention will be evident when viewed in light of the detailed description and appended claims.

### Detailed Description of the Invention

Substance names beginning with "poly", such as polyol or polyisocyanate, denote substances that, per molecule, formally comprise two or more of the functional groups occurring in their names.

### Polyurethane

The term "polyurethane", or PU, refers to a polymer comprising multiple urethane (-NH- C(O)-O-) linkages within the backbone and, optionally, urea linkages (NH-C(O)-NH-) in the backbone. Polyurethanes that include urea linkages in addition or urethane linkages are sometimes referred to in the art as "polyurethaneureas". The term "polyurethane", or PU, as used herein generally encompasses both polyurethanes and polyurethaneureas. Typically, the number of urea linkages, when present, is less than the number of urethane linkages in polyurethanes of the invention. The polyurethane of the invention may include no urea linkages in some embodiments.

### Two component (2K) PU

The term 2K is commonly used as a description for two component paints. The term 2K as used herein can also encompass two component paints. To further explain what is meant by component - traditionally, 2K PU coatings systems have been formulated with: a) the first component comprising a high molecular weight, high functionality polyol combined where desired with pigments, catalysts, molecular sieves, fillers, further polyactive hydrogen compounds and other optional additives; and, b) the second component comprising a low viscosity, high functionality liquid polyisocyanate crosslinker. Two-component coating compositions in the context of the present invention are understood to be coating compositions in which the binder component and cross- linking agent component must be stored in separate vessels because of their (high) reactivity. Typically the two components are mixed only shortly before application and then react. If desired, the coating compositions can comprise other optional materials known in the art of formulated coatings, such as plasticizers, anti-oxidants, hindered amine light stabilizers, UV light absorbers and stabilizers, surfactants, flow control agents, thixotropic agents such as bentonite clay, pigments, fillers, organic co-solvents, reactive diluents, catalysts, including phosphonic acids, retardants, masking agents, grind vehicles, colorants, abrasion resistant particles and other customary auxiliaries.

### Solvents

The invention is for the use of encapsulated catalysts in water-based PU formulations. Water-based can include formulations that only use water as the solvent, or that use water with co-solvents. Co-solvents can include but are not limited to: acetone, acetic acid, acetonitrile, methanol, ethanol, 1,2 butanediol, 1,3 butanediol, 1,4 butanediol, 2 butoxyethanol, 1-propanol, 2-propanol, 1,3 propanediol, 1,5 pentane diol, ethylene glycol, glycerol, propylene glycol, pyridine and triethylene glycol. Understanding that excessive levels may lead to undesirable consequences such as breakage. Solvents that are non-miscible with water may also be present in the formulation. Examples of such co-solvents include but are not limited to xylenes, methoxy propyl acetate and other glycol ether acetates, methyl ethyl ketone, ethyl benzene, hydrocarbons, fluorinated hydrocarbons and aromatic hydrocarbons. Again with an appreciation that high levels of these co-solvents could cause capsule flocculation or breakage.

Those skilled in the art may also recognise the potential to use encapsulated catalysts in solvent-free PU formulations.

### Polyols

A polyol is a polymeric alcohol containing multiple hydroxyl groups. In polymer chemistry, polyols are defined as compounds with multiple hydroxyl functional groups available for organic reactions. A molecule with two hydroxyl groups is a diol, one with three is a triol, one with four is a tetrol and so on. Polymeric polyols could be polyether polyols, polyester polyols or OH terminated polyacrylics or combination of them. Many polyols are polydispersive materials, being blends of two or more polyols each of specific molecular weights, to give intermediate molecular weight materials. The polyol can be, for example, a latex in water, or a solved resin in water, or a dispersion or suspension in water, or any of the above in mixtures of solvents with water. For example, the following commercially available polyols, or mixtures thereof, can be used as polyols:

Polyoxyalkylene polyols, also referred to as polyether polyols or oligoetherols, which are polymerization products of ethylene oxide, 1,2-propylene oxide, 1,2- or 2,3-butylene oxide, oxetane, tetrahydrofurane or mixtures thereof, potentially polymerized with the aid of a starter molecule having two or more active hydrogen atoms, such as water, ammonia or compounds comprising multiple OH or NH groups, such as 1,2-ethanedial, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediois, octanediols, nonanediols, decanediols, undecanediols, 1,3- and 1,4-cyclohexane dimethanol, bisphenol A, hydrogenated bisphenol A, 1,1,1-trimethylolethane, 1,14-trimethylolpropane, glycerin, aniline, as well as mixtures of the above-mentioned compounds. It is possible to use both polyoxyalkylene polyols that have low levels of unsaturation (as measured according to ASTM D-2849-69 and indicated in milliequivalents unsaturation per gram of polyol (mEq/g)), for example produced with the aid of what are known as double metal cyanide complex catalysts (DMC catalysts), and polyoxyalkylene polyols that have higher levels of unsaturation, for example produced with the aid of anionic catalysts such as NaOH, KOH, CsOH or alkali alcoholates.

Polyoxyalkylene diols or polyoxyalkylene triols, and more particularly polyoxyethylene and polyoxypropylene diols and triols, are particularly suitable. Specifically suited are polyoxyalkylene diols and triols having a level of unsaturation of less than 0.02 mEq/g and a molecular weight ranging from 1,000 to 30,000 g/mol, and polyoxypropylene diols and triols having a molecular weight ranging from 400 to 8,000 g/mol.

So-called ethylene oxide-terminated ("EO-endcapped", ethylene oxide-endcapped)) polyoxypropylene polyols are likewise particularly suitable. The latter are special polyoxypropylene polyoxyethylene polyols, which can be obtained, for example, by further alkoxylating pure polyoxypropylene polyols, in particular polyoxypropylene diols and trials, after the polypropoxylation reaction with ethylene oxide is completed, as a result of which these comprise primary hydroxyl groups.

Polyether polyols grafted with styrene-acrylonitrile or acrylonitrile-methyl methacrylate.

Polyester polyols, also referred to as oligoesterols, produced according to known methods, in particular the polycondensation of hydroxycarboxylic acids or the polycondensation of aliphatic and/or aromatic polycarboxylic acids with dihydric or polyhydric alcohols.

Particularly suitable polyester polyols are those which are produced from dihydric to trihydric, in particular dihydric alcohols, such as ethylene glycol, diethylene glycol, propylene glycol, dipropylene glycol, neopentyl glycol, 1,4-butanediol, 1,5-pentanediol, 3-methyl-1,5-hexanediol, 1,6-hexanediol, 1,8-octanediol, 1,10-decanediol, 1,12-dodecanediol, 1,12-hydroxystearyl alcohol, 1,4-cyclohexane dimethanol, dimer fatty acid diol (dimer diol), hydroxypivalinic acid neopentyl glycol ester, glycerin, 1,1,1-trimethylolpropane, or mixtures of the aforementioned alcohols, with organic dicarboxylic or tricarboxylic acids, in particular dicarboxylic acids, or the anhydrides or esters thereof, such as succinic acid, glutaric acid, adipic acid, trimethyl adipic acid, suberic acid, azelaic acid, sebacic acid, dodecanedicarboxylic acid, maleic acid, fumaric acid, dimer fatty acid, phthalic acid, phthalic acid anhydride, isophthalic acid, terephthalic acid, dimethyl terephthalate, hexahydrophthalic acid, trimellitic acid and trimellitic acid anhydride, or mixtures of the aforementioned acids, and polyester polyols made of lactones, such as E caprolactone and starters, such as the aforementioned dihydric and trihydric alcohols.

Polycarbonate polyols, such as those that become available by reacting, for example, the above-mentioned alcohols-used for the synthesis of the polyester polyols-with dialkyl carbonates, diaryl carbonates or phosgene.

Block copolymers which carry at least two hydroxyl groups and which comprise at least two different blocks having a polyether, polyester and/or polycarbonate structure of the type described above, in particular polyether polyester polyols.

Polyacrylate and polymethacrylate polyols.

Polyhydroxy-functional fats and oils, such as natural fats and oils, in particular castor oil; or polyols obtained by chemical modification of natural fats and oils-so-called oleochemical polyols-such as the epoxy polyesters or epoxy polyethers obtained by epoxidation of unsaturated oils and by subsequent ring opening with carboxylic acids or alcohols, or polyols obtained by hydroformylation and hydrogenation of unsaturated oils; or polyols obtained from natural fats and oils by decomposition processes such as alcoholysis or ozonolysis and subsequent chemical cross-linkage, such as by transesterification or dimerization, of the decomposition products thus gained or derivatives thereof. Suitable decomposition products of natural fats and oils are in particular fatty acids and fatty alcohols as well as fatty acid esters, in particular the methyl esters (FAME), which can be derivatized by hydroformylation and hydrogenation to form hydroxyfatty acid esters, for example.

Polyhydrocarbon polyols, also referred to as oligohydrocarbonols, such as polyhydroxy-functional polyolefins, polyisobutylenes, polyisoprenes; polyhydroxy-functional ethylene propylene, ethylene butylene or ethylene propylene diene copolymers; polyhydroxy-functional polymers of dienes, in particular of 1,3-butadiene, which can produced in particular also from anionic polymerization; polyhydroxy-functional copolymers from dienes such as 1,3-butadiene or diene mixtures and vinyl monomers such as styrene, acrylonitrile, vinyl chloride, vinyl acetate, vinyl alcohol, isobutylene and isoprene, for example polyhydroxyfunctional acrylonitrile/butadiene copolymers, as they can be produced, for example, from epoxides or amino alcohols and carboxyl-terminated acrylonitrile/butadiene copolymers; and hydrogenated polyhydroxy-functional polymers or copolymers of dienes. The term "molecular weight" of oligomers or polymers is always understood to mean the number average molecular weight Mₙ.

### Polyisocyanate

The term "polyisocyanate" comprises compounds having two or more isocyanate groups, regardless of whether these are monomeric diisocyanates, oligomeric polyisocyanates or polymers comprising isocyanate groups. A suitable polyisocyanate, for example, is a polyisocyanate in the form of a monomeric diisocyanate or triisocyanate or an oligomer of a monomeric diisocyanate or a derivative of a monomeric diisocyanate. For example, suitable monomeric diisocyanates or triisocyanates are 1,4-tetramethylene diisocyanate, 2-methylpentamethylene-1,5 diisocyanate, 1,6-hexamethylene diisocyanate (HDI), 2,2,4- and 2,4,4-trimethyl-1,6-hexamethylene diisocyanate (TMDI), 1,10-decamethylene diisocyanate, 1,12-dodecamethylene diisocyanate, lysine and lysine ester diisocyanate, cyclohexane-1,3 and -1,4 diisocyanate, 1-methyl-2,4-and -2,6-diisocyanato cyclohexane and any arbitrary mixtures of these isomers, 1-isocyanato-3,3,5-trimethyl-5-isocyanatomethyl cyclohexane (=isophorone diisocyanate or IPDI), perhydro-2,4'- and -4,4'-diphenylmethane diisocyanate (HMDI), 1,4-diisocyanato-2,2,6-trimethylcyclohexane (TMCDI), 1,3- and 1,4-bis-(isocyanatomethyl)-cyclohexane, m- and p-xylylene diisocyanate (m- and p-XDI), m- and p-tetramethyl-1,3- and -1,4-xylylene diisocyanate (m- and p-TMXDI), bis-(1-isocyanato-1-methylethyl)naphthalene, dimer and trimer fatty acid isocyanates, such as 3,6-bis-(9-isocyanatononyl)-4,5-di-(1-heptenyl)cyclohexene (dimeryl diisocyanate), a,a,a',a',a",a"-hexamethyl-1,3,5-mesitylene triisocyanate, 2,4- and 2,6-toluylene diisocyanate and arbitrary mixtures of these isomers (TDI), 4,4'-, 2,4'- and 2,2'-diphenylmethane diisocyanate and arbitrary mixtures of these isomers (MDI), mixtures made of MDI and MDI homologs (polymeric MDI or PMDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatodiphenyl (TODI), dianisidine diisocyanate (DADI), 1,3,5-tris-(isocyanatomethyl)benzene, tris-(4-isocyanatophenyl)methane and tris-(4-isocyanatophenyl)thiophosphate. Preferred polyisocyanates are commercially available diisocyanates. Particularly preferred are HDI, IPDI, TDI and MDI as well as oligomers of diisocyanates and isocyanate group-comprising polyurethane polymers (NCO prepolymers).

### Hardener or Crosslinker

The resin can comprise a crosslinker, also known in the art as a hardener. The crosslinker, or crosslinking resin or agent, can be any suitable crosslinker or crosslinking resin known in the art, and will be chosen to be reactive with the functional group or groups on the film-forming resin. Non-limiting examples of suitable crosslinkers include phenolic resins, amino resins, melamine resins, carbamate resins, aminoplasts, polyisocyanates including blocked isocyanates, polyepoxides, beta-hydroxyalkylamides, polyacids, anhydrides, organometallic acid-functional materials, polyamines, polyamides, and mixtures thereof.

### Chain Extenders

Chain extenders are low-molecular-weight diols or diamines used to increase urethane and/or urea content in the final polymer. Chain extender molecules can be relatively long or short, aromatic or aliphatic, hydrophilic or hydrophobic. Because they are low molecular weight and react with isocyanate, chain extenders become part of the so-called hard segment in the resultant polymer and can dramatically influence hardness, modulus, crystallinity and so on. For example, diamine chain extenders can be used as rheology modifiers because they react rapidly with isocyanate (before the polyol) to build molecular weight and viscosity.

### Definition of catalyst

As used herein, the term "catalyst" refers to a substance that increases the rate of the curing reaction. The catalyst may include metal catalyst, amine catalyst, acid catalyst, enzyme catalyst, ionic liquid catalyst or a combination thereof, as well as other catalysts known in the art. Non-limiting examples of catalysts that are suitable for use with the present invention include those formed from tin, mercury, cobalt, calcium, cesium, zinc, zirconium, bismuth, lithium and aluminum as well as metal salts of carboxylic acids, diorganometallic oxides, mono- and diorganometallic carboxylates, and the like. In embodiments, the metal catalyst comprises bismuth neodecanoate, bismuth 2-ethylhexanoate, zinc neodecanoate, calcium naphthanate, cesium naphthanate, cobalt naphthanate, dibutyl tin dilaurate, dibutyl tin diacetate, dibutyl tin dioctoate, and dibutyl tin naphthanate and combinations thereof. Suitable amine catalysts include, for example, tertiary amine catalysts, including but not limited to triethylamine, 1,4-diazabicyclo[2.2.2]octane, 1,8-diazabicyclo[5.4.0]undec-7-ene, and N-methylmorpholine.

The capsules may contain a co-solvent, or mixture of co-solvents to enable improved capsule stability and catalyst homogeneity. The catalyst could optionally include other surfactants or ligands in excess. Solvents suitable for this invention cover all aliphatic or aromatic solvents including but not limited to xylenes, methoxy propyl acetate and other glycol ether acetates, methyl ethyl ketone, ethyl benzene, hydrocarbons, fluorinated hydrocarbons and aromatic hydrocarbons, long chain alcohols, dimethyl sulfoxide, dimethyl formamide, petroleum ether, carboxylic acids, unsaturated fatty alcohols or acids and trigyeride-based oils such as linseed oil. In this work we have examined linseed oil and xylenes as solvents for the encapsulated bismuth catalyst as they gave more stable capsules, especially xylenes, than using no solvent with the catalyst.

### Pigment or Colourant Definition

As used herein, the term "colorant" means any substance that imparts colour and/or other opacity and/or other visual effect to the composition. The colorant can be added to the coating in any suitable form, such as discrete particles, dispersions, solutions and/or flakes. A single colorant or a mixture of two or more colorants can be used in the coatings of the present invention. A "filler," on the other hand, does not necessarily impart any colour and/or opacity and/or other visual effect to the composition.

Example colorants include pigments, dyes and tints, such as those used in the paint industry and/or listed in the Dry Color Manufacturers Association (DCMA), as well as special effect compositions. A colorant may include, for example, a finely divided solid powder that is insoluble but wettable under the conditions of use. A colorant can be organic or inorganic and can be agglomerated or non-agglomerated. Colorants can be incorporated into the coatings by grinding or simple mixing. Colorants can be incorporated by grinding into the coating by use of a grind vehicle, such as an acrylic grind vehicle, the use of which will be familiar to one skilled in the art.

The encapsulation of the catalyst prevents interaction between the free catalyst and the colourant. This avoids the issue of adsorption by catalyst to colourant during storage, which can lead to a loss of activity or performance.

### Definition of encapsulation and encapsulating material

In this invention the microcapsules comprise a material that will substantially protect or isolate the catalyst from initiating a curing reaction with the film-forming resin, and will upon the film-forming process release some or all of the catalyst. The microcapsules can be described as carriers. Microencapsulated catalyst systems have been described in the prior art. WO2003/006151, WO 2005/016510 and WO 2007/096592 describe encapsulated palladium based catalyst systems and methods for their production. In a previous invention we described a strategy to reduce skin formation by use of an encapsulated iron-based complex [WO/2015/011430]. Microencapsulation can be carried out by a range of physical methods including pan and air coating, spray drying and centrifugal extrusion, and by physico-chemical and chemical methods such as complex coacervation, interfacial polycondensation and crosslinking, in-situ polymerisation and matrix polymerisation. Suitable microcapsules for use in this invention may include those made from gelatin, polyoxymethylene urea formaldehyde, melamine formaldehyde, or polyurethane or silica. Such encapsulation technology is available by Mikrocaps d.o.o.

In embodiments of the invention the microcapsules comprise of crosslinked polymer and/or copolymer, and/or copolymer having hydrophilic and hydrophobic character. In one formulation the capsules are polyurethane based. A non-exhaustive, non-limiting example of microencapsulation involving polycondensation reactions forming poly(urethane-urea) linkage is provided. In the first step two mixtures are prepared separately (i.e. an aqueous and oil phase) and then mixed together. The aqueous phase comprises of surfactants, whilst the oil phase comprises of metal catalyst or catalysts, oil-soluble amine and optionally co-solvent. Using a high shear mixer in the second step, an oil-in-water type of an emulsion is prepared by combining the aqueous and oil phases. For suitable stabilisation, proper surfactants are needed here as the emulsion should be stable for a few hours at temperatures up to 90 °C. Nonionic surfactants with HLB < 5 are preferred. One non-ionic surfactant useful in this regards are the class of esters known as sorbitan esters (also known as Span® surfactants). The emulsion is even more stable when a combination of more than one type of sorbitan ester is employed in the reaction.

The droplet size of the oil-phase is dependent upon several factors, including the rate of mixing in addition to the surfactant type and concentration. With higher shear mixing, smaller and homogeneous droplets are obtained.

No reaction occurs until the addition of at least one isocyanate. Different types of isocyamates could be used; although it has been found that one particularly useful isocyanate is dicyclohexylmethane diisocyanate (known as HMDI). Optionally toluene diisocyanate (TDI) could also be added or in combination thereof.

At this point, an amine terminated chain may react with an isocyanate end-group to form a urea linkage. Primary and secondary amines react readily with isocyanates without added catalyst due to their inherent nucleophilicity. As with hydroxyl compounds, aromatic amine reactions are slower than aliphatics because of electron delocalization. Electron withdrawing groups ortho or para to the aromatic amine moiety reduce nucleophilicity even further. Primary amines are generally more reactive than the more hindered secondary amines. These trends allow a high degree of control over the reactivity of amines toward isocyanates and can be utilized to design formulations with specific processing characteristics. Because of highly reactive amines typically used in the microencapsulation process, the reaction is started when the amine contacts an isocyanate. The reaction occurs even at room temperature.

Isocyanate groups react with hydroxyl groups (if they are present in the polyol reactant) to form polyurethane chains. Primary, Secondary, and tertiary alcohols exhibit decreasing reactivity, in that order, due to increasing steric hindrance. Catalysts and/or elevated temperatures are usually required to drive the NCO-OH reactions to completion.

Isocyanate end-groups may react with urethane NH groups to form an allophanate and isocyanate end-groups may react with a urea NH to form a biuret. These reactions are believed to cause interconnection and crosslinking of chains.

After this stage no further reduction of droplets size is possible because liquid droplets convert into solid capsules. In the last step of the polymerisation reaction, the temperature is typically increased. Constant moderate mixing is necessary because of tendency of capsules to form agglomerates which became chemical bonded and no separation is possible later. After completion of reaction the dispersion is cooled down.

In addition to the above, various processes for microencapsulating material are available. These processes can be divided into three categories - physical, phase separation and interfacial reaction. In the physical methods category, microcapsule wall material and core particles are physically brought together and the wall material flows around the core particle to form the microcapsule. In the phase separation category, microcapsules are formed by emulsifying or dispersing the core material in an immiscible continuous phase in which the wall material is dissolved and caused to physically separate from the continuous phase, such as by coacervation, and deposit around the core particles. In the interfacial reaction category, the core material is emulsified or dispersed in an immiscible continuous phase, and then an interfacial polymerization reaction is caused to take place at the surface of the Core particles thereby forming micro-capsules.

There are various types of interfacial polymerisation process but all involve reaction at the interface of a dispersed phase and a continuous phase in an emulsion system. In one type of interfacial polymerisation process, the in situ interfacial polymerisation reaction, all of the wall-forming monomers are contained in one phase of the emulsion. In situ condensation of the wall forming materials and curing of the polymers at the oil/water phase interface may be initiated by heating the emulsion to a temperature of between about 20°C to about 100°C and optionally adjusting the pH. The heating occurs for a sufficient period of time to allow substantial completion of in-situ condensation of the prepolymers to convert the droplets to capsules consisting of solid polymer shells entrapping the core materials. One type of catalyst microcapsule prepared by in-situ condensation and known in the art is exemplified in U. S. patent 4, 956, 129 and WO/1998/028975.

While it is contemplated that encapsulation is desired partially for the isolation of catalyst from the coating components, it should be appreciated that some free catalyst may remain on the capsule, through the capsule or indeed in the solvent phase outside of the capsule.

It is expected that the particle size of the capsules could have an effect on the coating properties or the catalyst performance. Very small particles will give a higher surface area and potentially distribute more catalyst throughout the coating, whereas larger particles may create poor gloss if they are at the coating surface. It can be appreciated that the capsule wall thickness will have an effect on the nature and rate of catalyst release. In this invention the microcapsule average particle size can be a range from 0.1 to 100 microns, preferably 1-40 microns and most preferably 1-10 microns.

### Definition of film formation

Put simply, the film formation is the process by which the applied paint becomes a coating. Many studies can be found to explain this process, however for the purposes of this invention we can explain it thus: after the application of a fresh paint layer, the coating dries and the film formation takes place. The drying phase comprises the loss of solvent by evaporation and the crosslinking or curing process typical to a 2K polyurethane system. For solutions, where no binder particles are present, film formation occurs as the solvent evaporates, since the polymer chains are intimately mixed. Film formation from polymeric dispersions, however, requires the coalescence of individual polymer spheres or particles and interpenetration of the polymer chains. Films prepared from polymeric dispersions exhibit a minimum film forming temperature and processing conditions must exceed this temperature in order to form the film.

### How the capsule works and Capsule Definition

This release of catalyst upon film formation can extend the pot life and shelf life of a curable film-forming composition when compared with a non-encapsulated catalyst. Accordingly, the cure speed can be modified by adjusting the amount of encapsulated catalyst, or catalyst content in the capsules, whilst having no or minimal effect on pot life as compared to traditional freely added catalyst.

For example, a bismuth-content of the encapsulated catalyst, when considered in terms of the quantity of elemental bismuth, is present in the two-component polyurethane composition according to the invention in a quantity of 0.0002 to 1% by weight, and in another example present in a quantity of 0.001 to 0.2% by weight, and in yet a further example in a quantity of 0.002 to 0.1% by weight, based on the weight of the composition.

The catalyst is associated with a capsule, or carrier. As used herein, reference to the capsule, or carrier, refers to any substance to which a catalyst is coated on, or any substance in which all or part of a catalyst is contained, encapsulated by, hydrogen bonded with, or otherwise non-covalently associated. In an embodiment, the capsule includes a microcapsule shell or encapsulant containing the catalyst in its core. In the embodiment the terms "microcapsule", "micro-capsule shell", "carrier", "capsule" and "encapsulant" means a small structure of any shape and texture containing a core or internal space that is enclosed within the structure. In embodiments the catalyst can be partially encapsulated in the structure such that the structure does not entirely enclose the catalyst within the core. In other embodiments, the carrier includes a solid matrix type capsule with the catalyst contained entirely or partially therein.

### Potential use for 1K Paints

The skilled reader will recognise that the use of microencapsulated bismuth may have similar utility in either one-component coatings with low reactivity or blocked crosslinking agents or in other two-component compositions.

### Incorporation methods into coatings

The encapsulated catalyst according to the invention is preferably present in the first component, which has the advantage that the storage stability (shelf life) of the polyisocyanate, which is sensitive to catalytically acting compounds, in the second component is not impaired. The encapsulated catalyst according to the invention can be used as a catalyst alone or together with other catalysts, such as bismuth, tin or zirconium compounds or tertiary amines, for example.

In another aspect, one could add the capsules to a formulation as required. The capsules are a suspension in water and can be mixed into 2K PU paint, or one of the components, by mixing.

Another aspect of the invention is that one could encapsulate more than one catalyst in the same capsule. The encapsulated catalyst according to the invention can optionally comprise further customarily used auxiliary substances and additives, such as pigments, plasticizers or diluents, curing agents, cross-linking agents, chain extenders, further catalysts, adhesive promoters, stabilizers, rheology additives and drying agents, and the like.

### Coating and coating types

The term coating can be defined as layer of a substance spread over a surface for protection or decoration; a covering layer. Such coatings as contemplated herein may include, but are not limited to inks, sealants, adhesives, stains, paints. For example, a 2K PU formulation forms a coating after application to a surface, after it has completed a film-forming process.

The invention has broad utility in relation to a wide variety of 2K water-based coating compositions, which term is to be interpreted broadly herein. Examples of 2K polyurethane composition according to the invention can be employed in many areas, for example for general industrial coatings, automotive coatings such as primers, basecoats or topcoats, for automotive refinish coatings, for decorative coatings, for marine and protective coatings, for wood coatings, as a casting compound, sealant, adhesive, covering, coating, paint, sub-coating, rigid foam, flexible foam, molding, elastomer, fiber, film or membrane for building and industrial applications, for example as an electrical potting compound, knifing filler, seam sealant, cavity sealant, joint sealant, assembly adhesive, autobody adhesive, window adhesive, sandwich element adhesive, laminating adhesive, laminate adhesive, packaging adhesive, wood glue, parquet flooring adhesive, anchoring adhesive, floor covering and coating, balcony and roof coating, protective concrete coating, parking garage coating, pipe coating, anticorrosive coating, textile coating, primer, furniture foam, upholstery foam, filter foam, insulating foam, sound insulating foam, sealing foam, packaging foam, autobody foam, pattern plate, damping element, sealing element, tire, roller, bearing, cylinder, conveyor belt, elastic thread, shoe sole, housing, window casement section, implant, cellular rubber and the like.

The invention could be considered for use in polyurethane composites formulations where polyurethanes have been reported to give superior tensile strength, impact resistance, and abrasion resistance compared with composites based on unsaturated polyester and vinyl ester resins. Potential composites uses could be envisaged by those in the art, and might be, but not limited to: car components, foamed structural automotive interior and exterior parts such as pickup truck boxes, load floors, package shelves, and inner door panels, applications such as window lineals and bathtubs to electric light poles. Additionally the invention could be used with ink formulations, including but not limited to flexographic, gravure, digital, small office or home office, toner and three dimensional printing. Those skilled in the art may also find application for encapsulated bismuth, or other organometallic catalysts, in one and two component silane terminated coatings, siloxane-modified systems or in non-isocyanate polyurethane coatings.

### Application of coatings with capsules

The present coatings can be applied to any substrates known in the art, for example, automotive substrates, industrial substrates, packaging substrates, wood flooring and furniture, apparel, electronics including housings and circuit boards, glass and transparencies, sports equipment including golf balls, and the like. These substrates can be, for example, metallic or non-metallic. Metallic substrates include tin, steel, tin-plated steel, chromium passivated steel, galvanized steel, aluminum, aluminum foil, coiled steel or other coiled metal. Non-metallic substrates include polymeric, plastic, polyester, polyolefin, polyamide, cellulosic, polystyrene, polyacrylic, poly(ethylene naphtbalate), polypropylene, polyethylene, nylon, EVOH, polylactic acid), other "green" polymeric substrates, poly tethylene terephthalate) ("PET"), polycarbonate, polycarbonate acrylonitrile butadiene styrene ("PC/ABS"), polyamide, polymer composites, wood, veneer, wood composite, particle board, medium density fiberboard, cement, stone, glass, paper, cardboard, textiles, leather, both synthetic and natural, and the like. The substrate can be one that has been already treated in some manner, such as to impart visual and/or colour effect.

In embodiments the dry film thickness may vary as desired. For example, and without limitation, the coating compositions of the present invention can be applied to the substrate at a dry film thickness of 2.5 to 1250 microns, such as 12 to 250, or 25 to 100 microns. In other embodiments, the coatings can be applied to a dry film thickness of 50 microns or greater, 100 microns or greater, 125 microns or greater, 200 microns or greater, 500 microns or greater, or even thicker.

### Other definitions

Free bismuth catalyst meaning bismuth catalyst that is in direct contact with other coating components.

Systems - as used herein systems means other types of formulations that could be used to make a coating.

Capsule suspension - a solution of water containing capsule particles, which in turn contain catalyst(s). The water may or may not contain some free catalyst.

### Disclaimer about ranges of values and terms used

Where percentages for quantity are referred to herein (wt %, % w/w or %), these mean, unless a context clearly dictates to the contrary, percentages by weight with respect to the components of the coating formulation or mixture.

We studies the mode of catalyst release, catalyst location, effect of catalyst concentration, capsule concentration, pot life, shelf life and the effects of storage on performance.

### Capsule Description

| Sample Number | 239 | 240 | 246 | 247 | 248 | 249 |
|---|---|---|---|---|---|---|
| Capsules Wall Type | PU-Urea | PU-Urea | PU-Urea | PU-Urea | PU-Urea | PU-Urea |
| Catalyst Release | Slow Release | Slow Release | Slow Release | Slow Release | No Catalyst | No Catalyst |
| BorchiKat 315* Catalyst Content (% w/w) | 16.40 | 16.40 | 19.00 | 20.00 | 0.00 | 0.00 |
| Linseed Oil Content (% w/w) | 7.00 | 4.70 | 0.00 | 0.00 | 0.00 | 0.00 |
| Xylene Content (% w/w) | 0.00 | 0.00 | 4.70 | 5.00 | 25.00 | 23.60 |
| Viscosity 24°C / cps | 28 | 30 | 32 | 32 | 186 | 152 |
| Mean Particle Size / µm** | 18.8 | 13.6 | 5.5 | 4.0 | 5.0 | 4.0 |
| solid content 1 h 60°C / % w/w | 43 | 38 | 52 | 40 | 22 | 21 |

| | | | | | | |
|---|---|---|---|---|---|---|
| *BorchiKat 315 is a commercially available Bismuth neodecanoate catalyst. **Mean Particle Size calculated from optical microscopy. The particle sizes of samples 239 and 246 were measured using a mastersizer laser particle size analyser from Malvern, the size data can be seen here: | | | | | | |

| **Sample** | **d₁₀[µm]** | **d₅₀[µm]** | **d₉₀[µm]** | **d₅₀[µm]** | **d₅₀[µm]** |
|---|---|---|---|---|---|
| 239 (Water) | 1.365 | 5.953 | 16.502 | 5.953 | 5.953 |
| 246 (Water) | 1.432 | 3.411 | 6.219 | 3.411 | 3.411 |

### Hydrolysis Study

A vial was half-filled with a 5% w/w solution of Borchi Kat 315 in water. Separate vials were also each half-filled with a 5% w/w solution of the microcapsules containing bismuth catalyst, namely 239, 240, 246 and 247. The vials were then stored at ambient room temperature and in an oven at 40°C and in a fridge at 5°C. The microcapsule samples remained the same after storage by visual appearance; they also appeared intact by microscopy, however the Bismuth neodecanoate catalyst (BKat 315) had formed an intractable gel - this is a clear sign of possible side reactions like the hydrolysis of the bismuth catalyst and of the stability of the capsules to hydrolysis. For example hydrolysis of the Bismuth neodecanoate would form bismuth oxide/hydroxide that precipitates in water, suggesting evidence of the hydrolysis of the Bismuth neodecanoate. Due to this difference between samples after storage in water we also infer that no appreciable catalyst had leaked from the capsules - showing them to be stable on storage in water, and more stable than bismuth neodecanoate when stored in water.

### Effect on Foam Creation in Water

A common issue that can cause issues in PU coatings, water-based or solvent-based (through moisture), is foaming caused by the catalyst. As the isocyanate reacts with water carbon dioxide is released and an amine is created, which can then go on to form other adducts; this process is accelerated by the catalyst. We filled plastic lids with an isocyanate hardener (Bayhydur 304) to a depth of 15 mm and to each tray we added a different catalyst for comparative study. We added each catalyst at the same concentration to the isocyanate, based on metal on binder solids (%). We then stored the lids at room temperature for 5 and 10 days.

LH10 gave the most foam production after only a short time at room temperature; after some days the other samples showed carbon dioxide bubbles, too. The Borchi Kat 315 gave more bubbles than the encapsulated materials. They all showed an increase in viscosity over 10 days. This demonstrates that the encapsulation can help to prevent reaction with the isocyanate. We expected some bubbles from the encapsulated catalysts because the capsules are provided in water and the isocyanate will still react slowly with water without the presence of catalyst. However the foaming was less than that of the non-encapsulated catalyst. It was not a surprise that the LC10 produced the most bubbles as we believe the tin catalyst will catalyse the reaction with water more than the bismuth catalyst in accordance with theory. We have used a qualitative scale of 1-5 in the following table, where 1 = no foaming and 5 equals >80% of the surface covered in bubbles:

| Sample | No Catalyst | LC10 | Borchi Kat 315 | 239 | 240 | 246 | 247 |
|---|---|---|---|---|---|---|---|
| Room Temperature | 1 | 5 | 4 | 2.5 | 2.5 | 2 | 2 |
| Room Temperature 5 days | 1 | 5 | 4 | 2.5 | 2.5 | 2 | 2 |

| | | | | | | | |
|---|---|---|---|---|---|---|---|
| Level of foaming 1-5. 1 = no foaming, 3 = ∼50% foaming and 5 equals >80% of the surface covered in bubbles. | | | | | | | |

### Indicator Data for Catalyst Location and for Stability Tests

To further investigate the stability of the capsules we found that we could add potassium iodide salt to show the presence of bismuth catalyst. We believe that reacting the Bismuth neodecanoate with potassium iodide results in a dark orange precipitate as well as BiI₄⁻ ions to give a bright orange solution, suggesting that these ions have adsorbed onto the capsules or partially-soluble bismuth catalyst. Upon addition of potassium iodide to bismuth neodecanoate we observed a dark orange precipitate and a bright orange solution. The following table shows our findings. It was clear that the catalyst developed a strong colour with the salt. The empty capsules (248 and 249) did not develop any colour. The water did not develop colour. This indicates that the method is sound for determining the presence of free catalyst. From this data we can also see that there is some free catalyst from the capsules, possibly a by-product of the manufacturing process and we have not quantified it. However, all samples were prepared to the same metal concentration (of bismuth) and the colour developed more strongly with concentration - it is clear that the concentration was far lower for the capsule samples than those with the non-encapsulated bismuth. We also saw no precipitate for the capsule-based samples. In addition, forced capsule rupturing with sulphuric acid clearly created a dark orange colour similar to that developed from the free bismuth catalyst and with accompanying precipitant. We also added BKat 315 to sample 248 containing potassium iodide (a suspension of empty capsules) and only upon addition of the bismuth catalyst could we clearly see the dark orange colour and the precipitate. We also centrifuged the capsule samples to separate the water from the capsules. The water layer was then tested with a sulphuric acid/potassium iodide mixture and we could only see the development of a faint orange colour, as also seen by the potassium iodide test. For further confirmation of the method we also added potassium iodide to a suspension of empty capsules and then added the potassium iodide, we saw no colour change; next we added the free bismuth catalyst to this suspension and then saw the colour change.

### Shear Stability Results and Investigation of Catalyst Release

We used our indicator test to see whether bismuth catalyst was released upon shearing conditions and during film-formation. For the shear test we took each capsules sample and subjected them to different shear rates. We also added potassium iodide so that we could see if there was a release of bismuth from the capsules - this would be the failure point. We found that only extremely high shear could break the capsules. When we apply a formulation with capsules (and the potassium iodide) by quadruplex applicator we use low shear stress (applied by hand as a draw-down) and we see no instant colour change. The colour change develops during the film-forming process only, and the colour develops typically after 30 minutes and up to 60 minutes for this formulation.

| Applied Shear | Equivalent Industrial Method | Broken capsules | Capsules Intact |
|---|---|---|---|
| Hand Mixing | Hand Mixing | No | Yes |
| Stirring 1000 rpm | Stirring | No | Yes |
| Speedmixer 3500 rpm 5 min | Dispersing / 2 bar Spraying / | No | Yes |
| Dispermat 5500 rpm 30 minutes | Dispersing / 6 bar Spraying / Pumping | No | Yes |
| Skandex, 1 hour, 300g glass beads | Milling, / Pearl Mill Shearing and Grinding effect | No | Yes |
| Ultra Turrax, 5 minutes 20,000 rpm | Ultra Turrax | Yes | No |

During film-formation we could see the development of the characteristic orange colour, which could only be seen during film-formation. This colour could be seen upon mixing and before application for the Borchi Kat 315. This demonstrates that the encapsulated catalyst only released upon film-formation and not before application. Sometimes the colour change could be difficult see due to the low concentration of catalyst and the dispersed nature of it, and the pH of the binder (as acidity is needed to help the colour change). We also made a coating of the capsule suspension with potassium iodide. In this case we could also see the colour change, after around 30 minutes and depending on film thickness, that indicated the catalyst had been released.

We repeated this study with a spray application, we sprayed the following formulations.

| Formulation for Spraying | No Catalyst | 246 | Borchi Kat 315 |
|---|---|---|---|
| Bayhydrol A 2470 40% | 86 | | |
| Surfynol BC | 2 | | |
| Water | 12 | | |
| Catalysts (metal on Polyol solid %) | | | |
| MC 246 | | 0.0032 | |
| BKat 315 | | | 0.0032 |
| | | | |
| Bayhydur304 | 32 | | |
| Butoxyl | 8 | | |

To spray the formulation we used a Sata Digital HVLP, Spraying Pressure 3.5 - 3.8 bar. We sprayed the coating to give a 200 micron wet thickness and then used the drying recorder to assess catalyst activity. The control had a through-drying time of 5 hours, Formulations 2 and 5 had a through-drying time of 4 hours each. In this example we can see that capsules can be added to formulations for spraying, and in following work we have also demonstrated that we can also use the capsules when applying by quadruplex applicator. We also believe other methods might also be used for application based on the high shear stability that we have observed.

### Example Formulations

All formulations in the following table were made to add up to 100% by weight, with the catalyst added additionally to give a value over 100%. We selected typical water-based PU formulations for the examples. In the formulations we also tested against a commercially available DBDTL catalyst (Borchers LH10) that is supplied in an emulsified form for water-based PU coatings.

We prepared formulations 1-6 based on a recommended water-based PU formulation for Bayhdrol A 2470, a common polyol for PU coatings. The catalyst quantity used in the formulation, both capsules and free catalyst, were calculated based on percentage metal on solids polyol. The catalyst content for the capsules was provided by Mikrocaps d.o.o as a percentage mass of the suspension. To be sure the desired mass of capsules were added to give the required metal (bismuth) content, the suspension was always mixed before weighing. The coatings were prepared by first mixing the catalyst into the polyol component for one minute at 3500 rpm. The polyol was then left for twenty four hours to stand as is the typical process, however we have seen that using the mixture immediately gave no change in catalyst activity. After standing the isocyanate component was then added to the polyol component and mixed for one minute at 3500 rpm. The formulations were then stored for shelf-life or, for making coatings, were applied using a quadruplex applicator to ABS plates to give a 150 microns wet film thickness. They were then left to film-form in a climate controlled room at 23°C and 60% humidity.

| | **Formulation** | | | | | |
|---|---|---|---|---|---|---|
| **Materials : Component A** | 1 | 2 | 3 | 4 | 5 | 6 |
| % wt Component A: Bayhydrol A 2270 40% in water / solvents | 73.2 | 73.2 | 73.2 | 73.2 | 73.2 | 73.2 |

| **Materials : Component B** | | | | | | |
|---|---|---|---|---|---|---|
| % wt Bayhydur 304 | 26.8 | 26.8 | 26.8 | 26.8 | 26.8 | 26.8 |
| Borchers LH 10 (metal on polyol solid %) | 0.009 | | | | | |
| Borchers Kat 315 (metal on polyol solid %) | | 0.0032 | | | | |
| 239 (metal on polyol solid %) | | | 0.0032 | | | |
| 240 (metal on polyol solid %) | | | | 0.0032 | | |
| 246 (metal on polyol solid %) | | | | | 0.0032 | |
| 247 (metal on polyol solid %) | | | | | | 0.0032 |

| | | | | | | |
|---|---|---|---|---|---|---|
| *Contains co-solvents with water. The metal contents of each catalyst are thus: LH10 had 1.8% tin, Borchi Kat 315 had 16% bismuth, capsules 246 and 247 had 3% bismuth and capsules 239 and 240 had 2.6 % bismuth. | | | | | | |

### Comparison of Film Properties

Formulations 1 - 6 were prepared and made into coatings. The formulations with encapsulated bismuth catalyst gave similar final-film pendulum hardness values to each other over time. The LH10 sample gave less final-film pendulum hardness to the coating than those made with the catalyst-containing capsules. The Borchi Kat 315 gave the highest final-film pendulum hardness. All formulations gave similar gloss and haze, except 247. The capsules caused no discoloration or turbidity in the coatings - we observed clear films. All data can be seen in the following table:

| | Pendulum Damping Konigs / numbers | | | | | | |
|---|---|---|---|---|---|---|---|
| | 1 day | 7 days | 14 days | 28 days | Gloss 20° / gloss units | Haze / Hazen units | Cross Cut Adhesion |
| **LH10** | 73 | 81 | 94 | 87 | 83 | 20 | GT 0 |
| **Borchi Kat 315** | 70 | 97 | 113 | 124 | 84 | 20 | GT 0 |
| **239** | 79 | 98 | 100 | 105 | 64 | 37 | GT 0 |
| **240** | 77 | 97 | 101 | 105 | 79 | 28 | GT 0 |
| **246** | 88 | 93 | 104 | 114 | 84 | 22 | GT 0 |
| **247** | 57 | 92 | 103 | 109 | 17 | 81 | GT 0 |
| **ZERO** | 90 | 93 | 102 | 108 | 17 | 84 | GT 0 |

**Pot-life:** Formulations 1 - 6 were prepared. Samples were taken at timed intervals for FTIR measurements and for making coatings (each time after being re-mixed). The coatings were applied using a quadruplex applicator to ABS plates to give a 150 microns wet film thickness. The isocyanate conversion was measured using FTIR. The pot-life of each formulation was assumed to be achieved when (i) the free isocyanate signal at 2250-2300 cm⁻¹ no longer obviously decreased in percentage transmittance and (ii) when the dry coating looked turbid. We took samples over a seven hour period for each formulation, and however we did not measured the precise time for pot-life, but more a range of time for comparative purposes and ease of measurement. LH10 had a pot-life between 1 and 2 hours, Borchi Kat 315 had a pot-life of between 4 and 5 hours. The encapsulated materials showed the longest pot-life of 6-7 hours which is the same pot-life as the sample with no catalyst. The varied non-catalyst content of the capsules (xylene or linseed oil) appeared to have no effect on the pot-life in these formulations.

**Shelf-Life effect on pot-life:** Formulations 1-6 were prepared without isocyanate (Bayhydur 304) to represent a supply form of the first component of the coating: they contained only Bayhydrol A 2470 and capsules in the given concentration. These polyol component formulations were stored for 4 weeks at room temperature, 40 °C and 5 °C. After storage the isocyanate was added to complete formulations 1-6, and the coatings were made using the same procedure as above. The same pot-life was found for all of the samples as seen for the initial pre-stored coatings, namely LH10 had a pot-life between 1 or 2 hours, Borchi Kat 315 had a pot-life of 4-5 hours. The encapsulated materials showed the longest pot-life of 6-7 hours. After storage for 4 weeks at 40 °C we could see gelled particles when using the stored, free Borchi Kat 315 catalyst (formulation 2) after preparing the formulation, and this was not seen in formulations 3-6 (encapsulated samples). This demonstrates that the free bismuth neodecanoate was not as stable over time (poor shelf-life) as compared with the encapsulated materials. The additional non-catalyst content of the capsules (xylene or linseed oil) appeared to have no effect on the pot-life in these formulations.

**Shelf-Life effect on activity:** The activity of the samples stored after 4 weeks were also tested. We used a linear drying recorder to measure the rate of drying and the three stages of drying, namely set, surface and through-drying. The free BorchiKat 315 had a set, through and surface time of 2, 3 and 4 respectively. Upon storage at any temperature for both 2 and 4 weeks the through-drying time increased to 5 hours. Therefore the BorchiKat 315 loses activity after 2 weeks of storage in polyol at room temperature and also at 40°C and 5°. Formulations 5 and 6 (with 246 and 247) had a set, surface and through drying time of 2, 3 and 4 respectively regardless of storage time or storage temperature, except for formulation 6. We found that the capsules containing linseed oil (239 and 240) were not as active as those with xylene (246 and 247).

### Effect of Dose

We took formulation 4 and varied the concentration of capsules in the formulation. We found that increasing the capsule content of the formulation also reduced the curing time. Using 0.015 metal on polyol solid % we found 2, 3, 4 hours set, surface and through dry time respectively; and at 0.0018 metal on polyol solid % we found 3, 4 and 5 hours set, surface and through dry time re-spectively.

### Solvent Stability

1 g of capsule suspension was mixed with 9.3 g of water and 0.5 g of potassium iodide. To this was added 0.2g of the chosen solvent to give a catalyst solids content of around 2.00 % w/w in water, potassium iodide (0.05% w/w) and solvent (0.02% w/w). If an orange colour developed it indicated that the capsules were not stable against the solvent (this colour appeared immediately if the solvent released the catalyst from the capsule). This example does not reflect a full formulation and so cannot be representative for all possible outcomes. This test and data is provided to give an indication of solvents that may be easier to use aside from water with this invention. It is clear those skilled in the art should try these solvents, and different solvents, and combinations of solvents to optimize for their own systems.

| Solvent | **stability (x = stable, - = unstable)** | |
|---|---|---|
| | **246** | **247** |
| **Dipropyleneglycolmonomethylether** | - | - |
| **Butylglycol** | - | - |
| **Butanol** | - | - |
| **3-Methoxy-1-Butanol-Actetate** | acceptable (after time destroyed) | acceptable (after time destroyed) |
| **Propylenglycol** | x | x |
| **White Spirit** | x | x |
| **Dimethylaminoethanol** | x | x |
| **Butylacetat** | x | x |
| **AMP 95** | x | x |

## Claims

1. A polyurethane film forming coating system comprising:
a first component polyol resin;
a curing agent catalyst substantially encapsulated within a carrier, said carrier dispersed in said polyol resin;
a second component crosslinking agent;
wherein the combining of said first and second components initiates film formation and a substantial release of catalyst from said carrier upon application of said film forming coating system to a substrate.

2. A polyurethane coating system as recited in claim 1 or 2 wherein said catalyst comprises one or more of the following: bismuth, mercury, tin, cobalt, calcium, cesium, zirconium, lithium, aluminum and zinc.

3. A polyurethane coating system as recited in any of the proceeding claims wherein said crosslinking agent is a polyisocycanate.

4. A polyurethane coating system as recited in any of the proceeding claims where said catalyst is an organometallic catalyst.

5. A polyurethane coating system as recited in any of the proceeding claims wherein said encapsulated catalyst is substantially resistant to hydrolysis until film formation.

6. A polyurethane coating system as recited in any of the proceeding claims wherein said encapsulated catalyst is substantially resistant to shear forces prior to film formation.

7. A polyurethane coating system as recited in any of the proceeding claims wherein said encapsulated catalyst is substantially resistant to heat prior to film formation.

8. A polyurethane coating system as recited in any of the proceeding claims wherein said base resin contains water.

9. A polyurethane coating system as recited in any of the proceeding claims wherein said carrier forms a complex comprising a plurality of catalyst containing microcapsules, said microcapsules having a polymeric outer layers comprised of a polyamide, a polysulfonamide, a polyester, a polycarbonate, a polyurethane, a polyurea polymer or mixtures thereof.
